# EUROPEAN PATENT APPLICATION

(11) **EP 1 897 926 A1**
(43) Date of publication of application: **12.03.2008**
(21) Application number: 06018969.3
(22) Date of filing: 11.09.2006
(51) Int. Cl.: C09J 201/00

(54) **Powder and water-based adhesive composition**

(71) Applicant: National Starch and Chemical Investment Holding Corporation, New Castle, Delaware 19720 (US)
(72) Inventor: Kehrer, Ulf, 6020 Emmenbrücke (CH); Koelliker, Robert, 6208 Oberkirch (CH); Patel, Nalini, Langley Bershire, SL3 7AL (GB); Liebrand, Roland T.W.G., 7271 DM Borculo (NL); Magnin, Christophe, 69430 Lantignie (FR); Burdett, Susan Moira, Woking Surrey GU22 0HX (GB); Heini, Urs, 6206 Neuenkirch (CH)
(74) Representative: Hagemann, Heinrich

(57) **Abstract**

The invention relates to an adhesive composition which is in one embodiment a free flowing, water-redispersible powder adhesive, comprising about 30 to 99.9 wt.-% of at least one water-insoluble, film-forming polymer and/ or at least one water-soluble polymer in powder form, about 0.1 to 35 wt.-% of at least one polyalkylene polyamine with a molecular weight of between about 300 and 10'000'000, and up to about 35 wt.-% of at least one water-soluble salt. In another embodiment, the adhesive composition is a water-based adhesive composition, comprising, based on the solids content of the adhesive about 30 to 99.4 wt.-%, of at least one aqueous dispersion of a water-insoluble, film-forming polymer and at least one water-soluble polymer, wherein the weight ratio of the water-insoluble to the water-soluble polymer is from about 0.001 : 1 to 100 : 1, about 0.1 to 35 wt.-%, of at least one polyalkylene polyamine with a molecular weight of between about 300 and 10'000'000, and about 0.5 to 35 wt.-% of at least one water-soluble salt, whereas the solids content of the water-based adhesive composition is between about 5 and 70 wt.-%. The processes to manufacture the same and the uses are described as well. The inventive adhesive composition is cost effective and provides excellent adhesion, in particular to difficult to bond substrates.

## Description

The invention relates to an adhesive composition which is as powder adhesive readily redispersible in water or is a water-based adhesive, as well as to the processes to produce the same and their uses.

Water-based adhesives are widely used for many different application areas. They are generally based on water-insoluble polymers, such as aqueous dispersions or emulsions. For less critical substrates, such as porous, cellulose-based materials such as paper to paper, board to paper or board to board applications, often adhesives are used, which are based on modified or unmodified polysaccharides, such as cellulose ethers, starch ethers or unmodified starches. Such adhesives do impart a big advantage, since these polysaccharides are typically available in powder form at normally reasonable cost. Thus, they do give all benefits associated with powders, such as e.g. being freeze thaw stable, having typically a longer shelf life due to no or lower microbiological attack and transportation benefits, since no water needs to be shipped. However, they cannot be used for demanding applications such as e.g. bonding difficult substrates having a low surface energy as bonding polyethylene foils to paper. State of the art technologies for such applications are therefore water-based adhesives based on water-insoluble polymers. They additionally contain further additives to boost their performance, in particular to improve the adhesion to difficult to bond substrates.

The US 20040063819 A1 describes a composition suitable for forming a primer layer on a polymer sheet, in particular on polyesters, comprising a latex with a Tg lower than 25°C, a polyethylene imine and a hydrophilic colloid, such as gelatine. Adhesives, and in particular powder adhesives and storage stable water-based adhesives, which can be easily manufactured, are not mentioned.

JP 60-112874 describes an adhesive for laminating paper on film, whereas the adhesive is obtained from an etfiylene-vinyl acetate copolymer and preferably a polyethylene imine to give improved adhesion. Powder adhesives as well as cost-effective water-based adhesives are not mentioned.

The US 5,821,294 describes water-based adhesives delivered in a stable one-part system comprising an emulsion of a vinyl and/or acrylic polymer, a water dispersed ionic or nonionic polyurethane, a polyethylene imine, and a carbodiimide. Powder adhesives as well as water-based adhesives which are cost-effective are not mentioned.

In JP 10-121014 is a mixture of a vinyl acetate/ ethylene copolymer emulsion, a nitrogen-containing resin such as polyethylene imine and a rosin and/ or a terpene described. The highly alkaline mixture can be neutralized with an acid. Powder adhesives as well as cost-effective water-based adhesives, which can be easily manufactured and which are storage stable, are not mentioned.

Although polyethylene imine is reported to improve adhesion, it was found that, when it is part of a water-based adhesive, a viscosity increase occurs within a few hours or days, in particular when a polysaccharide is being part of the formulation. This viscosity increase indicates strong interactive forces even in the liquid state between the polyethylene imine and the polysaccharide and potentially further components. Furthermore, if only, or to a large extent, synthetic raw materials are used to formulate a storage stable adhesive, the costs of the adhesive become a big handicap for highly formulated systems.

The problem of the present invention was therefore to propose a highly efficient, cost effective and storage stable adhesive to bond difficult substrates, in particular in industrial adhesive applications.

It was now surprisingly found that the objective can be achieved by an adhesive composition which is a free flowing, water-redispersible powder adhesive, comprising
a) about 30 to 99.9 wt.-% of at least one water-insoluble, film-forming polymer and/ or at least one water-soluble polymer in powder form,
b) about 0.1 to 35 wt.-% of at least one polyalkylene polyamine with a molecular weight of between about 300 and 10'000'000, and
c) up to about 35 wt.-% of at least one water-soluble salt.

Furthermore, the objective can also be achieved by an adhesive composition which is a water-based adhesive composition, comprising, based on the solids content of the adhesive,
d) about 30 to 99.4 wt.-%, of at least one aqueous dispersion of a water-insoluble, film-forming polymer and at least one water-soluble polymer, wherein the weight ratio of the water-insoluble to the water-soluble polymer is from about 0.001 : 1 to 100 : 1,
e) about 0.1 to 35 wt.-%, of at least one polyalkylene polyamine with a molecular weight of between about 300 and 10'000'000, and
f) about 0.5 to 35 wt.-%, of at least one water-soluble salt,
whereas the solids content of the water-based adhesive composition is between about 5 and 70 wt.-%.

Upon redispersion in water, the powder adhesive disintegrates to smaller particles, thus forming a water-based adhesive. Redispersion can occur with no or low mixing with water. However, for large scale industrial production, applying shear forces upon mixing aids faster redispersion. It was now surprisingly found that despite the expected strong interactive forces between the polyalkylene polyamine, in particular polyethylene imine, which is the trivial name of polyethylene polyamine obtained from the polymerization of ethylene imine, such forces do not occur or have no significant adverse effect on the redispersion of the free flowing powder adhesive in water.

The free flowing behaviour of the powder adhesive can in most cases easily determined optically by pouring the powder from e.g. a container onto a flat surface. However, for more critical cases, or if an exact rating is required, it can be determined in accordance with ISO 4342 by using the pourability tester according to Dr. Pfrengle (sold e.g. by Karg-Industrietechnik). Hence, a given amount of powder is being poured through a defined orifice onto a specified surface. By measuring the height of the obtained cone formed by the powder, the pouring angle can be determined according to a reference list. The lower the pouring angle, expressed in degrees, the better the pourability of the powder, and therefore the better the free flowing characteristics of the powder adhesive. Hence, the inventive free flowing powder adhesive has a pouring angle of about 60° or less, preferably about 55° or less, in particular about 50° or less.

The inventive powder adhesive composition contains about 30 to 99.9 wt.-%, preferably about 50 to 98.3 wt.-%, and in particular about 70 to 98.7 wt.-%, of at least one water-insoluble, film-forming polymer and/ or at least one water-soluble polymer. The inventive water-based adhesive composition contains about 30 to 99.4 wt.-%, preferably about 50 to 98.3 wt.-%, and in particular about 70 to 98.7 wt.-%, based on the solids contents, of at least one aqueous dispersion of a water-insoluble, film-forming polymer and at least one water-soluble polymer. In the water-based adhesive composition is the weight ratio of the water-insoluble to the water-soluble polymer from about 0.001 : 1 to 100 : 1, preferably from about 0.01 : 1 to 100 : 1, and in particular about 0.1 : 1 to 100 : 1, based on their solids contents.

The water-insoluble, film-forming polymer is most typically made by suspension-, emulsion- and/ or micro emulsion polymerisation or emulsified bulk polymers and can be a homo- and/ or copolymer, whereas a copolymer can consist of two or more different monomers. The obtained particles can be stabilized by one or more stabilizers such as modified and/ or unmodified, fully and/ or partially hydrolysed polyvinyl alcohol with degree of hydrolysis of preferably about 70 to 100, more preferably between about 80 and 98, and a Höppler viscosity of a solution with 4 wt-% solids of about 1 to 50 mPas, preferably about 2 to 45 mPas, in particular between about 3 to 40 mPas (measured at 20°C according to DIN 53015), polyvinyl pyrrolidone with molecular weights of preferably about 2000 and 400'000, cationic or anionic stabilization systems obtained by monomers such water-soluble polymers obtained from poly(meth)acrylic acid, polyvinylsulfonic acid as well as stabilizing systems as described e.g. in EP-A 1098916, EP-A 1109838, melaminformaldehyde sulfonates, naphthalineformaldehyde sulfonates, Styrene maleic acid- and vinylether-maleic acid copolymers, cold-water soluble polysaccharides such as cellulose, starch (amylose and amylopectine), guar and dextrines; alginates, peptides and/ or proteins such as gelatine, casein and/ or soja proteins. The cold-water-soluble polysaccharides can be modified by e.g. carboxymethyl, carboxyethyl, hydroxyethyl, hydroxypropyl, methyl, ethyl, propyl and/ or longer chain alkyl groups. Preferred are partially or fully hydrolyzed polyvinyl alcohol, hydroxyalkyl-cellulose, water-soluble starch ethers and/ or as dextrines particle stabilizers.

The term water-insoluble means that at least 80 wt.-%, preferably at least 90 wt.-%, more preferably at least 95 wt.-% and in particular at least 98 wt.-% of the water-insoluble, film-forming polymer is water insoluble at 23°C. They can be one single type of product or a mixture of several products, including one or several emulsion polymers combined with one or several synthetic solution polymers and/ or natural polymers. The polymers are typically, but not exclusively, based on at least one monomer selected from the group consisting of vinyl esters of C₁- to C₂₀- carboxylic acids such as vinyl acetate, vinyl propionate, vinyl butyrate, vinyl pivalate, vinyl 2-ethylhexanoate, vinyl laurate and vinyl versatates with up to 12 carbon atoms, such as VeoVa 9, VeoVa 10 and VeoVa 11, ethylene, vinyl chloride, C₁- to C₂₀- esters of acrylic or methacrylic acid, such as methyl (meth)acrylate, ethyl (meth)acrylate, butyl (meth)acrylate , 2-ethylhexyl (meth)acrylate, hydroxyethyl (meth)aaylate, acrylonitrile, (meth)acrylamide, derivatives of unsaturated dicarboxylic acids, such as C₁- to C₂₀- esters of itaconic acid, diisopropyl fumarate, dimethyl, methyl t-butyl, di-n-butyl, di-t-butyl and diethyl esters of maleic acid and fumaric acid, maleic anhydride, styrene and styrene derivatives as well as butadiene. Preferred monomers are vinyl acetate, ethylene, vinyl chloride, vinyl versatates, butyl acrylate, methyl methacrylate and combinations thereof.

The water-insoluble, film-forming polymer is most typically based on homopolymers and copolymers, including, but not restricted to, polyvinyl acetate, ethylene - vinyl acetate, ethylene - vinyl acetate - vinyl versatate, ethylene - vinyl acetate - (meth)acrylate, ethylene - vinyl acetate - vinyl chloride, vinyl acetate - vinyl versatate, vinyl acetate - vinyl versatate - (meth)acrylate, vinyl versatate - (meth)acrylate, all - (meth)acrylics, vinyl acetate - maleic acid and vinyl acetate - maleic acid ester, vinyl acetate - vinyl versatate - maleic acid and vinyl acetate - vinyl versatate - maleic acid ester, vinyl acetate - (meth)acrylate - maleic acid and vinyl acetate - (meth)acrylate - maleic acid ester, styrene - acrylate and/ or styrene - butadiene copolymers. Preferred polymers are vinyl acetate homopolymers, copolymers of ethylene and vinyl acetate with ethylene contents of preferably about 1 to 60%, more preferably between about 5 and 25%, and/ or Acrylates.

These polymers may also contain functional monomers from about 0.01 to 30%, preferably from about 0.05 to 20%, and particularly from about 0.1 to 10% by weight, based on the overall weight of monomer mixture. Functional monomers are well known to the expert and include, as non-limiting examples, monomers containing carboxylic groups, amines, amides, nitriles, cyano- and/ or N-methylol functionalised monomers such as cyanoethyl(meth)acrylate and N-methylol (meth)acrylamide, esters, ethers, thiols, sulfates, sulfonates, phosphates, N-vinyl functionalised monomers such as N-vinyl acetamide, carbamates, silanes and siloxanes, epoxides, glycidyl- and epihalohydrin-groups, cationic groups such as quaternary amines, anionic groups such as carboxylates, amphoteric monomers as well as monomers containing two or more copolymerizable groups such as divinyl adipate, diallyl maleate, triallyl cyanurate or divinyl benzene. Preferred functional monomers are glycidyl methacrylate, N-methylol acryl-amide, N-methylol methacrylamide, vinyl sulfonate and vinyltriethoxy silane.

When redispersed in water, it most typically forms a film at room temperature upon water evaporation. The obtained film can be flexible and is in general transparent or hazy. To get full benefit in certain applications it can be advantageous that the minimum film formation temperature is around room temperature or above to get a strong and tough adhesion bond. Some other applications require a more flexible film, typically obtained with minimum film formation temperatures below room temperature, typically between about 0 and 20°C, preferably between about 0 and 10°C and in particular between about 0 and 5°C.

Water-insoluble, film-forming polymer having strong thickening properties in water, being often a polymer or copolymer with a high glass transition temperature Tg of e.g. 50°C or above, are less preferred as water-insoluble, film-forming polymer. However, it can be used as thickener to adjust the required rheology of the powder adhesive and/ or the water-based adhesive composition.

The water-soluble polymer is a synthetic polymer or a natural polymer which can be modified or unmodified. It is also possible to use more than one water-soluble polymer, such as at least one synthetic polymer and at least one natural polymer, or at least two synthetic or natural polymers. They are in most cases available in powder form

Water-soluble synthetic polymers have molecular weights of about 1000 or more, in particular 2000 and more, as long as they dissolve in water to a transparent or slightly hazy solution, whereas the haziness generally arises from some impurities in the water-soluble polymer. When synthetic polymer powders need to be dissolved in water, the dissolution process can be often accelerated by applying heat and shear forces to the water phase containing the polymer powder. Using synthetic polymer powders with smaller powder particle size typically aids the ease of dissolution, requiring no or less heating. Non-limiting examples of water-soluble synthetic polymer powders are polyvinyl pyrrolidone, preferably with a molecular weight of about 2000 to 400'000, more preferably between about 5000 and 200'000 and in particular between about 10'000 and 100'000, and/ or modified or unmodified, partial or fully hydrolysed polyvinyl alcohol, with a degree of hydrolysis of about 70 to 100 Mol%, preferably between about 75 to 98 Mol%, in particular between about 82 and 92 Mol%, and a Höppler viscosity of a solution with 4 wt-% solids of about 1 to 50 mPas, preferably about 2 to 45 mPas, in particular between about 3 to 40 mPas (measured at 20°C according to DIN 53015), or water-soluble polyacrylates. Most preferred water-soluble polymers are polyvinyl pyrrolidone and/ or modified or unmodified partial or fully hydrolysed polyvinyl alcohol.

Water-soluble natural polymers are physically and/ or chemically modified or unmodified natural polymers, as long as they dissolve in water to a transparent or slightly hazy solution. Applying heat upon the dissolution is sometimes helpful, such as for cellulose ethers. For starches, for example, it is often a requirement to cook them in order to have a cold water-soluble product. This step is typically done separately, before drying the product to a powder. It is possible to have such a cooking step be part of the dissolution process upon making the water-based adhesive composition. Non-limiting, selected examples of water-soluble natural polymers are modified or unmodified polysaccharides such as cellulose, starch (amylose and/ or amylopectine), dextrines, guar, xanthan and welan gum, alginates, peptides and/ or proteins such as gelatine, casein and/ or soya proteins. It is often preferred that the polysaccharides are modified by e.g. carboxy, carboxyalkyl, hydroxyalkyl, alkyl, alkyleneglycol and/ or polyalkyleneglycol groups, where the alkyl is a linear or branched C₁- to C₂₀-alkyl chain, preferably C₁- to C₄-alkyl chain, or C₁- to C₂₀- alkyl succinimides. Preferred water-soluble natural polymers are polysaccharides, in particular unmodified or modified cellulose such as hydroxyethyl and/ or methyl hydroxyethyl cellulose, starch, guar and/ or dextrine, whereas water-soluble starches and starch ethers, which can be e.g. hydroxyalkylated and/ or modified with hydroxyl- and/or alkyl succinic anhydride are particularly preferred.

The solids content of the adhesive composition is measured by well known means at a temperature range between about 105 and 120°C and is best expressed by the amount of non-volatiles or solids relative to the total amount of volatile or liquid and non-volatiles or solid portions, independent on the amount of air incorporated in the system. The solids content of the free flowing, water-redispersible powder adhesive is very high and can be even up to 100%. Powder adhesives based solely on water-insoluble, film-forming polymers have typically a solids content of about 95% or higher, preferably about 98% or higher, in particular about 99% or higher. However, powder adhesives based solely on water-soluble polymers, in particular when based on natural polymers, have typically a solids content of about 80% or higher, preferably about 85% or higher, in particular about 90% or higher. Powder adhesives based on mixtures of water-insoluble, film-forming polymers and water-soluble polymers have a solids content between these ranges, depending primarily on the ratio and type of the polymers making up the powder adhesive.

The solids content of the water-based adhesive composition can range from about 5 to about 70 wt.-%, based on the total amount of water-based adhesive. Preferably it varies from 10 to 65% solids and particularly from about 20 to 60%. It primarily depends on the solution characteristics in water of the specific polymers. For instance, non-ionic high molecular weight cellulose ethers increase viscosity already with low concentrations in water. Also starch ethers or high molecular weight polyvinyl alcohols behave similarly, but the viscosity increase is not as drastic. Thus, at higher amounts of such types of water-soluble polymers, lower solid contents are used, while at larger amounts of water-insoluble polymers and/ or ionic water-soluble polymers higher solid contents can be achieved at similar viscosities.

There are no restrictions regarding the viscosity of the water-based adhesive composition and the powder adhesive, when redispersed in water. It can be very low, such as e.g. 100 mPas, or very high, such as 25'000 mPas or higher, expressed as Brookfield viscosity measured at 23°C and at 20 rpm, according to ASTM D1084 standard. Thus, it is the type of application defining the required viscosity. For industrial applications, which is a preferred use, the water-based adhesive composition and the powder adhesive, when redispersed in water, have typically viscosities of about 500 to 10'000 mPas, preferably of about 1000 to 7500 mPas, in particular of about 1500 to 5000 mPas.

The viscosity required can be obtained by optimising the various parameters, such as ratio and type of water-insoluble and water-soluble polymer, solids content, further functional components, the particle size obtained upon redispersion of the powder adhesive, the temperature of the adhesive, and, when a foamed adhesive is required, the amount of gas incorporated in the adhesive.

The rheology of the water-based adhesive is typically, and in particular for industrial applications, shear thinning. It ranges preferably from being nearly Newtonian to strongly shear thinning. This feature can be optimised for the individual application by adopting the water-insoluble and/ or water-soluble polymer, as well as adding rheology modifiers to adjust to the required properties.

The inventive adhesive contains about 0.1 to 35 wt.-%, preferably about 0.2 to 25 wt.-%, and in particular about 0.3 to 15 wt.-%, based on the solids content of the adhesive, of at least one polyalkylene polyamine.

Under the term polyalkylene polyamine fall also polyalkylene amines. They are in general water-soluble and can be synthesised by any means. One preferred route is the polymerisation of olefinically unsaturated amines such as N-[3-(Dimethylamino)-propyl](meth-)acrylamide, N-[3-(Dimethyl-amino)ethyl](meth-)acrylate, N-[3-(Trimethylammonium)propyl](meth-)acrylamide chloride, and/ or N,N-[3-Chloro-2-hydroxypropyl)-3-dimethylammoniumpropyl](meth-)acrylamide chloride, as well as vinyl amine, allyl amine, N-vinyl and/ or N-allyl formiate. The latter two can be hydrolysed, e.g. after the polymerisation step, to form the polyamine, or used as such. The olefinically unsaturated amine monomers can also be copolymerised with other olefinically unsaturated monomers such as vinyl acetate, vinyl pivalate, vinyl versatate, (meth)acrylates as well as other monomers known by the skilled person.

Another preferred route of synthesis is the ring-opening polymerisation of aziridines, leading to polymers having repeating units of the general formula (1) and/ or (2)

-(CR₁R₂-CR₃R₄-NR₅)ₓ- (1)

-(CR₁R₂-CR₃R₄-N⁺R₅R₆)ₓ- (2)

whereas R₁, R₂, R₃, R₄, R₅, and/ or R₆ can be the same or different and being H, phenyl, cycloalkyl, linear and/ or branched C₁- to C₅₀- alkyl, whereas the alkyl group can also contain one or more functional groups such as e.g. hydroxyl, carboxyl, amine, amide, thiol, ketone, aldehyde groups, alkyleneglycol and/ or polyalkyleneglycol groups, as well as some anionic groups forming a zwitterionic structure, or representing a further side chain of polymerised aziridine.

They can be homopolymerised or copolymerised by suitable other monomers. For aziridines, such other monomers are e.g. alkylene oxide, such as ethylene oxide or propylene oxide, epichlorohydrine or acrylamide.

The polyalkylene polyamines can be linear or branched, as well as derivatised, most typical at the secondary or tertiary nitrogen atom, leading to the substituents R₅, and/ or R₆, thus typically enhancing the cationic nature of the polyalkylene polyamine, being represented by the formula (2). When the substituents R₅ and/ or R₆ represent a group obtained by derivatisation, it is typically a C₁- to C₃₀- alkyl, cycloalkyl, aryl, alkyleneglycol and/ or polyalkyleneglycol group, preferably a C₃- to C₂₅- alkyl group and in particular a C₅- to C₂₀- alkyl group.

Polyalkylene polyamines get protonated with acids to form polyethylene imine salts. It depends on the pH of the surrounding medium if the product is partially or fully protonated. Either form can be used in the present invention.

The molecular weight, expressed as weight molecular weight, of the polyalkylene polyamine can range from about 300 to 10'000'000 or even more. Typically, polymers with a higher molecular weight are preferred, such as about 10'000 to 5'000'000, in particular about 100'000 to about 3'000'000.

A preferred aziridine is ethylene imine, which forms upon polymerisation polyethylene imine, also called "PEI", and can be used as linear and/ or as branched polyethylene imine. One typical branched form consists of about 25% primary, 50% secondary and 25% tertiary amine groups. Methods for preparing linear polyethylene imines as well as branched polyethylene imines are more fully described in Advances in Polymer Science, Vol. 102, pp. 171-188, 1992 (references 6-31) which are incorporated in their entirety herein by reference.

The inventive water-redispersible powder adhesive can, but does not have to, contain up to 35 wt.-% of a water-soluble salt. The inventive water-based adhesive contains 0.5 to 35 wt.-% of water-soluble salt. This addition increases the storage stability of the water-based adhesive composition as well as of the powder adhesive, when redispersed in water. Since the latter is very often used shortly after it is made, it is not as important as for the water-based adhesive. Neverless, the preferred amount of water-soluble salt is for both embodiments between about 0.5 and 25 wt.-%, and particular between about 1.0 and 15 wt.-%, based on the solids content of the adhesive.

The water-soluble salt has a water solubility at 20°C of about 10 g/ I water or higher, in particular of about 20 g/ I water or higher, and preferably about 50 g/ I water or higher. The water solubility is determined at a neutral pH, whereas the pH of the adhesive, measured as a 10% aqueous solution, is most typically between about pH 4 and 10, preferably between about 5 and 9. Hence, this can have some influence on the water solubility of the water-soluble salt. Preferred water-soluble salts can buffer an aqueous medium, in particular the inventive water-based adhesive.

Suitable water-soluble salts may comprise lithium, ammonium, aluminium, sodium, potassium, caesium, magnesium, calcium, barium, iron (II) and iron (III) or zinc cations, and chloride, bromide, iodide, formiate, nitrate, acetate, cyanate tartrate, oxalate, sulfonate, sulfite, sulfate, phosphate, carbonate, bicarbonate, bisulfate, bisulfite, dihydrogen phosphate, hydrogen phosphate, phosphonate or thiocyanate anions.

Non-limiting examples of suitable water-soluble salts that comprise the above-listed anions and cations include, but are not limited to, ammonium chloride, lithium bromide, lithium chloride, lithium formiate, lithium nitrate, calcium bromide, calcium chloride, calcium nitrate, calcium formiate, sodium bromide, sodium chloride, sodium formiate, sodium nitrate, potassium chloride, potassium bromide, potassium nitrate, potassium formiate, caesium nitrate, caesium formiate, caesium chloride; caesium bromide, magnesium chloride, magnesium bromide, zinc chloride, zinc bromide, sodium acetate, sodium carbonate, potassium carbonate, sodium bicarbonate, potassium bicarbonate, sodium or potassium diacetate, sodium or potassium phosphate, sodium or potassium hydrogen phosphate, sodium or potassium dihydrogen phosphate as well as combinations and derivatives thereof, sodium, calcium, ammonium and/ or potassium salt of polymerized aryl alkylsulfonate or lignosulfonate, naphthalene sulfonate condensates, sulfonated alkyl naphthalene condensates, aluminium chloride, copper chloride, iron(II) chloride, iron (III) chloride, lithium chloride, sodium chloride, potassium chloride, ammonium chloride, magnesium chloride, calcium chloride, zinc chloride, aluminium nitrate, ammonium nitrate, copper nitrate, iron(II) nitrate, iron(III) nitrate, lithium nitrate, sodium nitrate, potassium nitrate, magnesium nitrate, calcium nitrate, aluminium sulfate, copper sulfate, iron(II) sulfate, lithium sulfate, sodium sulfate, potassium sulfate, potassium hydrogen sulfate, ammonium sulfate, magnesium sulfate, sodium mono-hydrogen phosphate, potassium mono-hydrogen phosphate, potassium phosphate, ammonium mono-hydrogen phosphate, sodium dihydrogen phosphate, potassium dihydrogen phosphate, ammonium dihydrogen phosphate, zinc sulfate, lithium trifluoroacetate, sodium trifluoroacetate, potassium trifluoroacetate, calcium iodide, barium chloride, sodium bicarbonate, magnesium sulfate, sodium sorbate, potassium sorbate, calcium sorbate, sodium benzoate, potassium benzoate, calcium benzoate, ethyl p-hydroxy benzoate sodium salt, sodium sulfite, sodium bisulfite, sodium disulfite, potassium disulfite, calcium sulfite, calcium bisulfite, potassium bisulfite, sodium formiate, calcium formiate, potassium nitrite, sodium nitrite, potassium nitrate, sodium propionate, calcium propionate, potassium propionate, lithium carbonate, sodium carbonate, potassium carbonate, magnesium carbonate, ammonium carbonate, lithium bicarbonate, sodium bicarbonate, potassium bicarbonate, magnesium bicarbonate, calcium bicarbonate, ammonium bicarbonate, sodium bisulfate, sodium sesquicarbonate. Preferred are alkali and earth alkali metal salts of carbonate and bicarbonate, as long as they have the required water solubility. The composition also includes mixtures of two or more.

Optionally, low molecular weight non-crosslinked polymers of ethylenically unsaturated monomers, optionally copolymerised with other monomers, such as polyacrylates, having a molecular weights of about 500 to 100'000, more preferably from about 1,000 to 50,000, and most preferably about 5000 to 20'000, can be used as well. Water-soluble salts of acrylic acid and methacrylic acid homopolymers are particularly preferred. The water-soluble salts may be an alkali metal salt such as potassium or sodium salt, an ammonium salt, or a substituted ammonium salt. The salt may be in partially or fully neutralized form.

It is also possible to form the water-soluble salt by adding an organic and/ or an inorganic acid and an organic and/ or an inorganic base, which will form the salt upon reacting with each other. This reaction can occur upon contact with the aqueous phase. However, the obtained salt must have a water-solubility as defined above.

The inventive water-based adhesive composition and the powder adhesive, when redispersed in water, have typically a set speed of less than about 300 sec, preferably less than about 200 sec, more preferably less than about 100 sec, and in particular less than 60 seconds, when measured at 23°C and at a 50% relative humidity with a 36 µm thick layer at 23°C and 50% relative humidity and 385 µm thick carton boards with a weight of 275 +/- 3 g/m² and Cobb values on one side of 43 +/- 3 g/min/m² and 27 +/- 3 g/min/m² on the other side, whereas the Cobb values are determined using TAPPI standard T441M45. To measure the set speed, the viscosity of the water-based adhesive needs to be adjusted to a Brookfield viscosity of about 2000 to 4000 mPas, measured according to the ASTM D1084 standard at 23°C and 20 rpm, and to a solids content of between about 5 to 70 wt.-%.

It is typically preferred for water-based adhesives as well as for the powder adhesive, when redispersed in water, that the level of grits is very low, since the adhesive is applied in very thin layers, which are typically between about 20 to 50 µm. This thickness is further reduced e.g. by a factor of about two for adhesives with a solids content of about 50%. Hence, already fine agglomerates can cause e.g. strips when applied with a machine or even block the outlet of the nozzle, leading to lengthy cleaning cycles. Upon drying, an applied adhesive with a lot of grits can give an uneven surface, even through a thin substrate like e.g. a cigarette paper. Although the inventive adhesive can be a powder adhesive, it was surprisingly found that indeed no or only a very small amount of grit, compared to current, liquid water-based adhesives, is formed. This is attributed to the excellent redispersion of the powder adhesive. The size of the grits can easily be determined either by microscopy or filtration. The filtration through a web with a given mesh size leads to the amount of grits, which is larger than the mesh size. A further method to determine the amount of grits is to look for strips caused by grits upon application, in particular upon roller applications. The applied thickness corresponds to the grit size and the frequency of strips observed, relative to the amount of adhesive used, leads to an estimated grit level. The inventive water-based adhesive for industrial application has an amount of grits which is lower than 10 ppm, preferably lower than 1 ppm, most preferably lower than 0.1 ppm and in particular lower than 0.01 ppm, based on the weight of the water-based adhesive and the size of grits is considered to be larger than about 50µm, preferably larger than 35µm and in particular larger than 25µm.

The ease of bonding two substrates together depends, besides the compression force and time applied, strongly on the porosity and the surface energy of the substrates. Porous substrates are typically much easier to bond, since the adhesive can penetrate into the substrate, enabling a mechanical anchoring between the substrate and the dried adhesive. The water-based adhesive formulations of the invention may be used to bond one substrate to a second similar or different substrate. Porous substrates include paper and wood. As used herein "paper" means both paper and paperboard products, both single- and multi-ply (e.g., paper laminates, corrugated boards, solid fibres) sheets made from without limitation, Kraft paper, bleached paper, paper made from recycled fibres and the like. The term "wood" is meant to include wood composites and particle board and encompass chipboard, particleboard, medium density fibreboard, high density fibreboard, oriented strand board, hardboard, hardwood plywood, veneer core plywood, isocyanate or phenolic impregnated strawboard, and wood composites made from wood fibre and polymers, such as recycled polyethylene.

Adhesion to non-porous substrates relies on adhesive forces based on interactions of atoms and molecules only. If the surface energy of a substrate is high, also called a hydrophilic substrate, typically a standard adhesive can be used for bonding. However, for lower surface energy substrates, so called hydrophobic substrates, the adhesive needs to be formulated specifically in order to get proper adhesion. Examples of substrates with such lower surface energy are oriented polypropylene (OPP) and polystyrene films, which have a surface energy of around 42 dynes/cm, determined according to ASTM D2578 standard, high density polyethylene film (HDPE film) and high density polyethylene coated paper (HDPE coated paper) having both a surface energy of around 36 dynes/cm. Most typically, the latter surfaces are subjected to e.g. a corona, flame or ozone treatment to adjust the surface energy to around 42 dynes/cm to 38 dynes/cm. Surprisingly, it was found that such low surface energy substrates can be bonded with the inventive adhesive composition without further formulating work to form a good bond. Even a water-based adhesive or a powder adhesive, when redispersed in water, with a weight-ratio of water-redispersible polymer powder to water-soluble polymer powder from about 0.5 : 1 to 100 : 1, preferably from about 1.0 : 1 to 100 : 1, more preferably from about 2.0 : 1 to 100 : 1, and in particular from about 3.0 : 1 to 100 : 1, at a typical solids content of about 40 wt.-%, has the capability to bond a substrate with a low surface energy to a cellulosic substrate such as paper.

One preferred embodiment is that the water-based adhesive for industrial applications has low levels of Volatile Organic Compounds (VOC), thus being environmentally friendly. VOC's have a boiling point at ambient pressure of 250°C, thus most plasticizer, defoamer, residual monomers of the water-redispersible polymer powder and the synthetic water-soluble powder as well as solvents being used in the manufacturing process of water-soluble polymer powders are considered as such. Preferred VOC-levels are below 1000 ppm, preferably below 500 pm, most preferably below 200 ppm and in particular below 50 ppm.

Another preferred embodiment is that the water-based adhesive for industrial applications has low levels of plasticizer and/ or low levels of biocide and/or preservatives. When selecting a water-redispersible polymer powder with enhanced film-formation properties, the plasticizers can be reduced to about 1 wt.-% or lower, based on the solids level, preferably 0.5 wt.-% or lower and in particular it can be omitted completely. Since powders are much less susceptible to microbiological attack, compared to liquid adhesives, the inventive water-based adhesives need to have a shelf life of typically just a few days or even less, also the biocide level can be reduced to 0.1 wt.-% or lower, preferably 0.01 wt-% or lower and in particular the inventive water-based adhesives are even free of biocides and/or preservatives.

For certain applications it is very beneficial to apply the water-based adhesive in foamed state. They may be foamed by either introducing actively a gas or a gas mixture into the adhesive by means known in the art such as, but not limited to, chemical and/or mechanical means, such as mechanical stirring or agitation incorporating a gas or a gas mixture during the redispersion step into the adhesive. The preferred gas is nitrogen and the preferred gas mixture is air. The water-based adhesive may or may not contain an air entraining and/ or an air stabilization agent to stabilize the entrained gas. The density, measured at 23°C, of such foamed adhesives preferably ranges from about 1.200 to 0.010 g/cm³, more preferably from about 1.10 to 0.10 g/cm³, most preferably from about 1.0 to 0.40 g/cm³, and in particular from about 0.95 to 0.50 g/cm³.

It is well possible that further functional components are added to the water-based adhesive for industrial applications, either as a single component or as a combination of various components. They can be either in liquid or in solid state and can be water-soluble or water-insoluble. Non-limiting examples include nonionic, anionic, cationic or amphoteric surfactants or mixtures thereof at levels up to about 10 wt.-% or more, in particular up to about 5 wt.-%, based on the water-based adhesive. Further other functional components can be wetting agents, adhesion promoters, foam generators, defoamers, rheology modifiers, plasticizers, coalescing agents, biocides, preservatives, dyes, pigments, fragrances, tackifiers, waxes, UV indicators, humectants, pH-adjusters and/ or buffers, hardeners such as acidic metal salts such as AlCl₃, FeCl₃, Cr(NO₃)₃, crosslinkers such as polyisocyanates, epoxies, alkoxysilanes, boric acid and/ or their salts or formaldehyde-urea resins and formaldehyde-phenol resins, liquid adhesives, in particular water borne adhesives based on water-soluble adhesives as well as water-redispersible adhesives, which typically are latex-based, fillers and anti-caking agents such as carbonates, clays, silicates, hydrophobic and hydrophilic silica, pyrogenic or precipitated silicic acid, microsilica, kaolin, talc, magnesium hydrosilicate, light spar, polysaccharides such as starches, mica, nut shell flours, and wood flour. Preferred fillers are calcium carbonates, clays and silica. Other functional components commonly used in the art can be added as well. They can be added to just one of the powders or to both types of powders and/ or their manufacturing. Additionally, or alternatively, they can be added either before, during or after the redispersion and/ or dissolution step of the powders. Total amounts of such further functional components can range up to about 10 parts, preferably from about 0.002 to 5 parts, more preferably from about 0.005 to 5 parts, in particular from about 0.01 to about 1 parts of further functional components, based on 1 part of the powder adhesive or solids of the water-based adhesive.

There are different possibilities to produce the inventive water-redispersible powder adhesive. In one preferred process, the polyalkylene polyamine is mixed first with a) the aqueous redispersion of the water-insoluble, film-forming polymer, b) with the aqueous solution of the water-soluble polymer, or c) with the aqueous mixture of the water-insoluble, film-forming polymer and the water-soluble polymer, followed by drying the resulting mixture. In another preferred process, the polyalkylene polyamine is transferred into a powder first by known techniques e.g. by encapsulation and/ or adsorption onto an organic and/ or inorganic matrix. The obtained powder is then added during and/ or after drying of the water-insoluble, film-forrining polymer and/ or the water-soluble polymer. In an even further preferred process, the polyalkylene polyamine is sprayed onto the water-insoluble, film-forming polymer and/ or the water-soluble polymer either during and/ or after the drying of the water-insoluble, film-forming polymer and/ or the water-soluble polymer. If a water-soluble salt is added, it can be added before, during and/ or after the drying. In case further functional components will be part of the final powder, they can, in particular when they are in liquid form, be added before the drying. However, the further functional components can be added, in particular when they are in solid form, during and/ or after the drying.

The means of drying to obtain the water-redispersible powder adhesive depend typically on the type of material which requires drying. Water-insoluble, film-forming polymers are typically dried by spray drying, spray cooling and freeze drying, fluidized bed drying, flash drying, spray granulation, spray agglomeration. Water-soluble polymers are typically dried by drum drying, product flocculation followed by filtration and subsequent drying, as well as solvent evaporation, followed by grinding. However, other means can be applied as well, as long as the product properties are kept.

There are many different options to produce the inventive water-based adhesive. In one preferred process, the aqueous redispersion of the water-insoluble, film-forming polymer is mixed with the aqueous solution of the water-soluble polymer, wherein the polyalkylene polyamine, the water-soluble salt and the further functional components are added to at least one of the aqueous redispersion or solution first and/ or during or after the mixing of the polymers. In another preferred process, the water-insoluble, film-forming polymer is dried first and added as powder or as a redispersion to the aqueous solution of the water-soluble polymer, or the water-soluble polymer is added as powder into the water-insoluble, film-forming polymer dispersion, wherein the polyalkylene polyamine, the water-soluble salt and the further functional components are added either to the powder and/ or to the aqueous dispersion or solution first, and/ or during and/ or after the addition of the polymer powder to the aqueous polymer phase. An even further preferred process is that a powder adhesive, containing at least one water-insoluble, film-forming polymer and one water-soluble polymer in powder form, is redispersed in water and the polyalkylene polyamine and the salt are added to the powder adhesive and/ or during and/ or after the redispersion of the powder adhesive in water.

In an even other preferred embodiment, it is also possible to produce the water-based adhesive composition by redispersing the powder adhesive in water, whereas it is free of water-soluble salt, whereas the polyalkylene polyamine is added to the powder adhesive and/ or during and/ or after its redispersion in water.

However, the manufacturing of the inventive water-based adhesive composition is not limited by these processes, but can be obtained by other processes as well.

The inventive powder adhesive can be applied to substrates as such by e.g. electromagnetic means known in the art, followed by activation by water mist, heat and/ or radiation. Alternatively, it can be used to prepare a water-based adhesive. In the latter case, the redispersion of the inventive powder adhesive can be made for small amount s e.g. by hand. For industrial applications, where larger amounts are needed, batch-, micro-batch, semi-batch and/ or continuous mixing procedures can be used. If one powder is mixed, other powders can be already part of the aqueous phase, hence being dissolved or redispersed. For batch-type mixing, where all raw materials are added within a short period of time, typically larger containers are used as mixing vessel, e.g. from 10 litre up to 30 m³ or more, but e.g. 100 litre to 10 m³ is typically preferred. Micro-batch mixing is a sort of continuous mixing with small batch cycles of charging the chamber with raw material, mixing with water, which can be in parallel to the micro-batch, followed by discharging the chamber. Volumes of such chambers are typically small, e.g. just some cm³, up to a few hundred litres. However, for typical industrial applications, volumes of about 100 cm³ to about 100 litres are preferred. This process is particularly preferred when relatively small amounts of adhesives shall be produced continuously to avoid e.g. big product loss upon a standstill of the plant. In a semi-batch process is often one powder dissolved first, and the second powder is added later within a specific time period. The mixing vessels are generally comparable in size with the ones used for batch-type mixing. This method is particularly preferred when such mixers are already installed and/ or when one powder, typically the water-soluble powder, needs elevated temperatures to dissolve.

To accelerate the dissolution and/ or redispersion of the powder adhesive, it is helpful to apply some mixing energy, which can be quite high. This depends strongly on the type of powders as well as their grain size. If powders with smaller particles are used, less energy is typically required. However, it also depends on the type and amount of intermolecular bonds certain products have. As a general rule, but not as a requirement, the mixing shall be as strong that a vortex can be observed and typical speed of mixing, which again depends strongly on the size of vessel and the type of mixing element, is about 100 to 5000 rpm, more typically between 500 and 2000 rpm. Regarding the mixing elements, there is again no requirement, as long as a proper solution and redispersion is obtained. However, in many cases are propeller stirrer, e.g. jacket-propellers and/ or dissolver discs are preferred.

The inventive adhesive compositions can be used, as powder adhesives or as water-based adhesives, in all type of industrial and non-industrial adhesive applications. The latter can be wall-paper adhesives, as well as adhesives for paper, non-wovens, glass paper, posters and/ or large scale advertisement. For all cases, the substrates are typically bonded together by a process wherein the inventive adhesive, either as powder adhesive or as water-based adhesive, is applied to at least a first substrate, and a second substrate is brought in contact with the adhesive composition applied onto the first substrate, and the applied adhesive is optionally subjected to conditions which will allow the adhesive composition to form a set bond, such conditions including air, heat and/or pressure.

Non-limiting examples for industrial adhesive applications include paper converting applications, in particular tubes and core winding, spiral and convolute composite cans, edge banding and edge profiling, sleeves manufacturing, litho solid board and solid fibre lamination, honeycomb, in particular network construction and cover sheet lamination, bag handles, bags & sacks, in particular multi wall industrial sacks, especially cross/spot pasting, seaming and bottoming, envelopes and pockets, in particular remoistenable front flap, back seam and window patch, file manufacturing and book binding, in particular casing in and spine, stamps, remoistenable coatings, tissue and towel in particular pick up, tail seal and ply bonding applications, lumber and wood applications, structurally insulated panels, bottle labelling, glued lap, folding carton, composites boxes, corrugating, tissue & towel, tobacco applications, in particular as tipping, side seam, filter making and packaging, flexible laminating and packaging application and in medical and electronic applications.

Due to the big number of different applications, there is also a big variety of various machines, while applying by hand is also possible. However, it was found that the inventive water-based adhesive can be used with all different types of machines without any restrictions. Thus, it can be used on machines with jet nozzle, cascade or roller-type machines, whereas the rollers can be made out of brass, inox, aluminium, rubber and/or ceramic materials, and/or engraved steel rollers, plain-steel rollers, and/or multi-shear cylinder rollers, or machines using a stencil to apply the adhesive, whereas the stencil can be made out of brass, rubber, plastic, polymers, foamed plastic, as well as other suitable materials.

There is also no restriction regarding the machine speed on which the adhesive is being used. While low machine speeds is generally not problematic, high machine speeds often lead to problems with liquid adhesives, thus, limiting the speed of the machine below its technical capabilities. It was now found that the inventive adhesive does give no or clearly less restrictions, thus machines can often run faster than with the state-of-the art adhesives, which makes the use of the machines much more cost effective. Thus, the adhesive can be typically applied in litho lamination at e.g. 180 min/ min or higher, and in tobacco applications at e.g. 1000 to 1500 m/min or higher.

This invention is illustrated by the following non-limiting examples. General procedures are given below.

### Determination of the set speed:

White lined chipboard, supplied by Hedsor, is used with a thickness of 385 µm and a weight of 275 +/- 3 g/m² and Cobb values of 43 g/min/m² (grey side) and 27 g/min/m² (white non-porous side). Two strips of boards were bonded together (grey porous side to white non-porflus side) at controlled temperature of 23°C, using a controlled amount of adhesive, applied with a metered K-bar 4, giving a wet adhesive thickness of 36 µm, followed by applying an even pressure with the weight of a K-bar 2. The timer is immediately started and the two strips of board are slowly pulled apart. The time of extensive fiber tear is recorded as the set speed. The set speed varies with different adhesive coat weight (higher thickness leads to a longer set speed), different water absorbency (higher absorbency gives faster set speed) as well as different temperature and relative humidity (higher temperature and lower relative humidity lead to faster set speed).

### Determination of the Adhesion:

All adhesives were applied on the relevant high surface energy substrate in a 36 µm thick wet adhesive layer (K-bar 4), using a suitable applicator. Immediately afterwards, the second substrate with the lower surface energy was laid on the applied adhesive, followed by applying pressure by using a 2kg roller once in each direction. The samples were all cut into 25 mm wide stripes and left to dry overnight at room temperature and 50% relative humidity before determining the adhesion force using an Instron test machine at a speed of 300 mm/ min.

### Example 1

For the preparation of the reference adhesive Ref 2, a total of 198.3g of water was measured in a 400 ml plastic pot and stirred at 1000-1500 rpm using a standard lab mixer equipped with a 55 mm wide stirring blade. 34.2 g of starch powder (Emcol KP40 from Emsland) was added slowly at steady rate to the vortex of water. 60 g of water redispersible powder of a water-insoluble, film-forming polymer was added after 45 minutes and allowed to stir for 30 minutes to complete the mix.

This procedure was repeated for making the inventive water-based adhesive Adh 1, whereas the polyalkylene polyamine was together with the addition of the water redispersible powder. No lump and no grit formation as well as no immediate viscosity increase was observed. Table 1: Adhesion values of Kraft paper to a HDPE film of the inventive water-based adhesive (Adh 1) with a weight ratio of the water-insoluble to the water-soluble polymer of 1.75 : 1 and 1.27 wt.-%, based on the solids content of the adhesive, of a polyalkylene polyamine in comparison to a commercial high performing synthetic water-based adhesive (National 133-299a; Ref 1). Ref 2 composes of the same types and amounts of water-insoluble and water-soluble polymers as Adh 1, but without addition of polyalkylene polyamine. Since Adh 1 was made from powders and was applied readily, no salt addition was required.

| | | Ref 1 | Ref 2 | Adh 1 |
|---|---|---|---|---|
| Water [parts] | | N/A ^{h)} | 66.1 | 66.1 |
| WSPP [parts] ^{a)} | | N/A ^{h)} | 11.4 | 11.4 |
| type ^{b)} | | N/A ^{h)} | EVA-1 | EVA-1 |
| WRP [parts]^{b)} | | N/A^{h)} | 20.0 | 20.0 |
| Polyalkylene polyamine [parts] ^{c)} | | N/A^{h)} | 0 | 0.4 |
| Solids [wt.-%] ^{d)} | | 56.0 | 30.6 | 31.3 |
| Viscosity [mPas] ^{e)} | | 2000 | 2,120 | 2,240 |
| Viscosity [sec] ^{f)} | | 72 | 52 | 59 |
| Antifoam | | - | - | 0.05 |
| Adhesion: | outer substrate [N/mm]^{g)} | 2.83 | 2.09 | 3.06 |
| | inner substrate [N/mm]^{g)} | 3.00 | 2.32 | 3.05 |

| | | | | |
|---|---|---|---|---|
| a) The water-soluble polymer powder (WSPP) is a cold water soluble, pregelatinized and hydrolyzed potato starch (Emcol KP40 from Emsland Staerke GmbH). b) WRP stands for water redispersible powder of the water-insoluble, film-forming low-VOC ethylene-vinyl acetate copolymer EVA-1. c) The used polyalkylene polyamine is a polyethylene imine, which was added to the water phase as an aqueous solution with a solids content of 13 wt.-% and a Brookfield viscosity at 23 °C and 100 rpm of 190 mPas. d) The solids content was determined at 105°C using a ventilated oven. e) The Brookfield viscosity was determined according to ASTM D1084 standard, measured at 20 rpm and 23°C, unless otherwise described. f) The Ford cup viscosity was measured according to EN ISO 2431 with Ford cup No. 6 at 23°C. g) See above for the detailed procedure to measure the adhesion. h) N/A stands for "Not Applicable", since it is a commercial product. | | | | |

The results show clearly that the inventive water-based adhesive Adh 1 boosts the adhesion by 31% (adhesion to the inner substrate) and 46% (adhesion to the outer substrate), just by the addition of a small amount of a polyalkylene polyamine. Furthermore, the inventive water-based adhesive matches (adhesion to the inner substrate) or even surpasses (adhesion to the outer substrate) the adhesion of the commercial high performing synthetic water-based adhesive (National 133-299a; Ref 1). This result is even more surprising, since the solids, and therefore the dry coat weight, of the inventive adhesive Adh 1 is by 44% lower than the solids of Ref 1.

### Example 2

The inventive free flowing, water-redispersible powder adhesive WRPA-1 was prepared by mixing 1.11 wt.-% of polyalkylene polyamine (the same as in example 1, based on the solids of EVA-1) with the aqueous dispersion of the water-insoluble, film-forming polymer EVA-1, followed by spray drying using conventional techniques and parameters. The reference WRP EVA-1 was made the same way, but omitting the addition of the polyalkylene polyamine. In both cases, a free flowing white powder was obtained.

The caking behavior of WRPA-1 was tested by filling 50 ml powder into a metal cylinder of 30 mm diameter and a cylindrical stamp of 1.4 kg weight was placed on the powder. After storing the samples at 50°C for 7 and 14 days, respectively, the samples were allowed to cool to room temperature, and the powder was pushed out of the metal cylinder. The cylindrical form remained, but was easily destroyable. The caking behavior was assessed by determining the force needed to break the compacted powder cylinder with a Mecmesin type instrument.

**Table 2: Caking behaviour of the water-redispersible powder adhesive WRPA-1 after storage at 50°C for various times. The forces are averaged from 5 measurements. Forces up to 10 N to break the powder cylinder indicate very good anticacking properties.**

| Time of storage at 50°C | 1 day | 7 days | 14 days |
|---|---|---|---|
| Force to break powder cylinder [N] | 0.87 | 0.90 | 2.60 |

The force to break the powder cylinder increases slightly after a storage time of 14 days. Neverless, it is still an excellent result, since it is clearly below the 10 N "very-good" mark. The powder has still, after the powder got disintegrated, free flowing properties, similar to the untreated powder.

The redispersion behaviour was assessed by light scattering from the same powder using a Malvern mastersizer with a MSX-15 wet unit with a MSX-23 cell. The powder was added to the water, after the pump, stirrer, and ultra sonic have been adjusted to 40% of the maximum power and the particle size was measured after 15 minutes. Hence, using such gentle conditions, a good evaluation of the redispersion characteristics can be obtained, since small differences can be seen readily. The WRPA-1 disintegrated to a mean particle size of 8.3 µm, while the reference WRP EVA-1 gave 4.5 µm. Although the inventive powder adhesive showed a somewhat larger particle size, this is still a good redispersion, since numbers below 10 µm are considered to be fully acceptable. The same procedure was repeated with the powder adhesive samples after storing them at 50°C. Surprisingly, the powder still disintegrated nicely and did not show an increase in particle size even after 14 days at 50°C.

### Example 3

The further powder adhesives WRPA-2 and WRPA-3 were prepared the same way as WRPA-1, as described in example 2. The water-based adhesives Ref 3, Adh 2a, Adh 2b and Adh 2c were made as described for Ref 2 in example 1. No lump and no grit formation was observed.

The data from example 3 confirm the big adhesion booster effect, even when a very small amount of polyalkylene polyamine was added and being part of the water redispersible powder adhesive. Hence, the adhesion of the commercial high performing synthetic water-based adhesive (National 133-299a; Ref 1 in example 1) can be even surpassed. Increasing the amount of the polyalkylene polyamine in the powder adhesive does not have a negative impact on the adhesion obtained. In case it is not required to have such high adhesion values, it is also possible to decrease the amount of water-insoluble polymer, and increase the amount of the water-soluble polymer. Alternatively, the solids can be reduced, leading to a lower coat weight. Both options reduce the cost of the adhesive per applied area.

**Table 3: Adhesion values of Kraft paper to a HOPE film of the inventive water-based adhesives Adh 2a, Adh 2b and Adh 2c containing the same water-soluble polymer as in example 1 with a weight ratio of the water-insoluble to the water-soluble polymer of 1.97 : 1 and various amounts of polyalkylene polyamine, in comparison with the reference Ref 3, consisting of the same types and amounts of water-insoluble and water-soluble polymers, but without the polyalkylene polyamine. Since the samples were made from powders and were applied readily, no salt addition was required.**

| | | | Ref 3 | Adh 2a | Adh 2b | Adh 2c |
|---|---|---|---|---|---|---|
| WRP type^{a)} | | | EVA-1 | WRPA-1 | WRPA-2 | WRPA-3 |
| Polyalkylene polyamine in WRPA [parts] ^{b)} | | | - | 1.11 | 2.22 | 4.44 |
| Antifoam ^{c)} | | | 0.05 | 0.05 | 0.05 | 0.05 |
| Viscosity [mPas] ^{d)} | | | 2485 | 3570 | 4170 | 4780 |
| Viscosity (seconds)^{e)} | | | 62 | 90 | 100 | 114 |
| Average Adh. to HDPE to | | | | | | |
| | inner | [N/mm]^{f)} | 2.35 | 3.53 | 4.50 | 3.90 |
| | substrate | [%]^{g)} | - | +43 | +91 | +66 |
| | outer | [N/mm]^{f)} | 2.44 | 3.50 | 4.25 | 3.98 |
| | substrate | [%]^{g)} | - | +43 | +74 | +63 |
| Adhesion after 5 days^{h)} | | | | | | |
| | inner | [N/mm]^{f)} | 2.50 | n.m.^{h)} | 5.40 | 5.40 |
| | substrate | [%]^{g)} | - | - | +116 | +116 |
| | outer | [N/mm]^{f)} | 2.62 | n.m.^{h)} | 3.70 | 4.30 |
| | substrate | [%]^{g)} | - | - | +41 | +64 |

| | | | | | | |
|---|---|---|---|---|---|---|
| a) The WRP (water-redispersible powder) used to make up Ref 3 is the same EVA-1 as in example 1. b) The polyalkylene polyamine is the same polyethylene imine as used in example 1, but it was added to the water-insoluble, film-forming polymer before spray drying. c) The antifoam was added to the water-based adhesive. d) For Brookfield viscosity see footnote e) of table 1. e) For Ford Cup viscosity see footnote f) of table 1. f) For adhesion strength see footnote g) of table 1. g) Increase of adhesion relative to the Ref 3 sample. h) n.m. stands for "not measured". | | | | | | |

### Example 4

The water-based adhesives Adh 3a and Adh 3b were prepared as Ref 1 in example 1, but using WRPA-4, consisting of the water-insoluble polymer EVA-2 and 2 wt.-% of polyethylene imine. Before use, the samples were allowed to stand for 1 hour.

**Table 4: Viscosity build-up of Adh 3a (without salt addition) and Adh 3b (with 2 wt.-% salt addition) as well as adhesion forces obtained after adjusting the viscosity to a range between 3000 to 4000 mPas.**

| | Adh 3a | Adh 3b |
|---|---|---|
| Water [parts] | 66.1 | 66.1 |
| WSPP [parts]^{a)} | 11.4 | 11.4 |
| WRPA-4 [parts]^{b)} | 20.0 | 20.0 |
| NaHCO3 [parts]^{c)} | - | 2.0 |
| Initial viscosity [mPas]^{d)} | 11,460 | 6,000 |
| Correction water added (%)^{e)} | 19.0 | 5.0 |
| Corrected Viscosity [mPa.s]^{d)} | 3,865 | 3,225 |
| Viscosity after 3 days [mPa.s]^{d)} | 5,600 | 4,460 |
| Viscosity after 4 days [mPa.s]^{d)} | 5,960 | 4,280 |
| Final Solids [wt.-%] ^{f)} | 23.0 | 28.6 |
| Adhesion to outer substrate [N/mm]^{g)} | 2.08 | 3.50 |
| Adhesion to inner substrate [N/mm]^{g)} | 1.00 | 3.70 |

| | | |
|---|---|---|
| a) The water-soluble polymer powder (WSPP) is a cold water soluble, pregelatinized and hydrolyzed potato starch (Emcol CK5 from Emsland Staerke GmbH). b) The WRPA-4 was prepared as WRPA-1, consisting of 2 wt.-% of the same polyethylene imine as used in example 1 and of the ethylene-vinyl acetate copolymer EVA-2. c) Sodium bicarbonate was added to the water-based adhesive together with the WRPA-4. d) For Brookfield viscosity see footnote f) of table 1 e) The amount of correction water which was required to adjust the water-based adhesive to a viscosity of between 3000 and 4000 mPas. f) For solids content see footnote e) of table 1 g) Adhesion force measured on Kraft paper to 12 µm thick HDPE foil. | | |

Adh 3a developed within the short time of 1 hour a significantly increased viscosity, while the viscosity increase for Adh 3b was much smaller. The latter was attributed to the starch, which shows such an effect also alone. In order to get an application viscosity of the range 3000 to 4000 mPas, water was added. Due to the large amount of water required in Adh 3a for viscosity adjustment, the solids decreased a lot, leading to a reduced coat weight, which is too low to give sufficient adhesion. However, the addition of a water-soluble salt minimizes such negative viscosity changes without having a negative impact on the adhesion. Furthermore, the salt addition allows the viscosity of the example Adh 3b to increase just incrementally and keeps it constant at an acceptable level. Without salt addition, the viscosity continues to increase even after 3 days.

## Claims

1. Adhesive composition which is a free flowing, water-redispersible powder adhesive, comprising
a) about 30 to 99.9 wt.-% of at least one water-insoluble, film-forming polymer and/ or at least one water-soluble polymer in powder form,
b) about 0.1 to 35 wt.-% of at least one polyalkylene polyamine with a molecular weight of between about 300 and 10'000'000, and
c) up to about 35 wt.-% of at least one water-soluble salt.

2. Adhesive composition which is a water-based adhesive composition, comprising, based on the solids content of the adhesive,
d) about 30 to 99.4 wt.-%, of at least one aqueous dispersion of a water-insoluble, film-forming polymer and at least one water-soluble polymer, wherein the weight ratio of the water-insoluble to the water-soluble polymer is from about 0.001 : 1 to 100 : 1,
e) about 0.1 to 35 wt.-%, of at least one polyalkylene polyamine with a molecular weight of between about 300 and 10'000'000, and
f) about 0.5 to 35 wt.-% of at least one water-soluble salt,
whereas the solids content of the water-based adhesive composition is between about 5 and 70 wt.-%.

3. Adhesive composition according to claim 1 or 2, **characterised in that** the water-insoluble, film-forming polymer is based on at least one monomer selected from the group consisting of vinyl esters of C₁- to C₂₀- carboxylic acids, ethylene, vinyl chloride, C₁- to C₂₀- alkyl esters of acrylic acid and methacrylic acid, acrylonitrile, (meth)acrylamide, styrene and styrene derivatives and/or butadiene.

4. Adhesive composition according to at least one of the claims 1 to 3, **characterized in that** the water-soluble polymer is at least one synthetic polymer, in particular polyvinyl pyrrolidone, modified or unmodified, partial or fully hydrolysed polyvinyl alcohol, or at least one modified or unmodified natural polymer, in particular a modified or unmodified polysaccharide and/or a protein.

5. Adhesive composition according to claim 4, **characterized in that** the polysaccharide is an unmodified or modified cellulose, starch, guar and/ or dextrine, in particular an unmodified or modified starch and/ or dextrine.

6. Adhesive composition according to at least one of the claims 1 to 5, **characterised in that** the adhesive contains about 0.2 to 25 wt.-%, in particular about 0.3 to 15 wt.-%, based on the solids content of the adhesive, of at least one polyalkylene polyamine.

7. Adhesive composition according to at least one of the claims 1 to 6, **characterized in that** the polyalkylene polyamine is obtained by a ring-opening polymerisation of aziridines, in particular of ethylene imine, and/ or by polymerisation of olefinically unsaturated amines, in particular of vinyl amine.

8. Adhesive composition according to claim 7, **characterised in that** the polyalkylene polyamine is derivatised polyalkylene polyamine, in particular derivatised at the nitrogen atom.

9. Adhesive composition according to at least one of the claims 1 to 8, **characterized in that** the water-soluble salt has a water solubility at 20°C of about 10 g/ I water or higher, in particular of about 20 g/ I water or higher.

10. Adhesive composition according to at least one of the claims 1 to 9, **characterized in that** the adhesive composition has a set speed of less than about 300 sec, in particular less than about 200 sec, when redispersed in water to and/ or when adjusted to a water-based adhesive having a Brookfield viscosity of about 2000 to 4000 mPas, measured according to the ASTM D1084 standard at 23°C and 20 rpm, the set speed being measured with a 36 µm thick layer at 23°C and 50% relative humidity and 385 µm thick carton boards with a weight of 275 +/- 3 g/m² and Cobb values on one side of 43 g/min/m² and 27 g/min/m² on the other side, and a solids content of between about 5 to 70 wt.-%.

11. Adhesive composition according to at least one of the preceding claims, **characterized in that** the powder adhesive and/ or the water-based adhesive contains up to about 10 parts of further functional components, based on 1 part of the powder adhesive or solids of the water-based adhesive.

12. Adhesive composition according to claim 11, **characterized in that** the further functional components are plasticizers, defoamers, wetting agents, adhesion promoters, foam generators, hardeners, waxes, surfactants, rheology modifiers, fragrances, dyes, pigments, preservatives, UV-indicators, coalescing agents, humectants, tackifiers, crosslinking agents, in particular boric acid or their salts, pH-adjusters and/ or buffers, liquid adhesives, in particular water borne adhesives, anticacking aids, organic and/ or inorganic fillers.

13. Process to produce a powder adhesive composition according to at least one of the claims 1 and 3 to 12, **characterized in that**
1) the polyalkylene polyamine is mixed a) with the aqueous dispersion of the water-insoluble, film-forming polymer, b) with the aqueous solution of the water-soluble polymer, or c) with the aqueous mixture of the water-insoluble, film-forming polymer and the water-soluble polymer, followed by drying the resulting mixture, or
2) the polyalkylene polyamine is transferred into a powder first, and the obtained powder is a) added during and/ or b) after drying of the water-insoluble, film-forming polymer and/ or the water-soluble polymer, or
3) the polyalkylene polyamine is sprayed onto the water-insoluble, film-forming polymer and/ or the water-soluble polymer a) during and/ or b) after the drying of the water-insoluble, film-forming polymer and/ or the water-soluble polymer, and
the water-soluble salt is added a) before, b) during and/ or c) after the drying, and the further functional components are added, in particular when in liquid form, a) before, and, in particular when in solid form, b) during and/ or c) after the drying.

14. Process to produce the water-based adhesive composition according to at least one of the claims 2 to 12, **characterized in that**
1) the aqueous dispersion of the water-insoluble, film-forming polymer is mixed with the aqueous solution of the water-soluble polymer, wherein the polyalkylene polyamine, the water-soluble salt and the further functional components are added to at least one of the aqueous dispersion or solution first and/ or during or after the mixing of the polymers, or
2) a) the water-insoluble, film-forming polymer is dried first and added as powder or as a redispersion to the aqueous solution of the water-soluble polymer or b) the water-soluble polymer is added as powder into the water-insoluble, film-forming polymer dispersion, wherein the polyalkylene polyamine, the water-soluble salt and the further functional components are added either c) to the powder and/ or d) to the aqueous dispersion or solution first, and/ or during and/ or after the addition of the polymer powder to the aqueous polymer phase, or
3) a powder adhesive, containing at least one water-insoluble, film-forming polymer and one water-soluble polymer in powder form, is redispersed in water and the polyalkylene polyamine and the salt are added to a) the powder adhesive and/ or b) during and/ or c) after the redispersion in water.

15. Process to produce the water-based adhesive composition according to at least one of the claims 2 to 12, **characterized in that** the powder adhesive according to claim 1, and optionally according to at least one of the claims 3 to 12, is redispersed in water and is free of water-soluble salt, whereas the polyalkylene polyamine is added to the powder adhesive and/ or during and/ or after the redispersion in water.

16. Water-based adhesive composition obtainable by the process according to claim 14 or 15.

17. Use of the adhesive composition according to at least one of the claims 1 to 12 in paper converting applications, in particular tubes and core winding, edge banding and edge profiling, sleeves manufacturing, litho solid board and solid fibre lamination, honeycomb, in particular network construction and cover sheet lamination, bag handles, bags & sacks, in particular multi walls industrial sacks, envelopes and pockets, in particular remoistenable front flap, back seam and window patch, file manufacturing and book binding, in particular casing in and spine, stamps, remoistenable coatings, tissue and towel in particular pick up, tail seal and ply bonding applications, lumber and wood applications, structurally insulated panels, bottle labelling, glued lap, folding carton, composites boxes, corrugating, tobacco applications, in particular as tipping, side seam, filter making and packaging, flexible laminating and packaging application and in medical and electronic applications.

18. Use of the adhesive composition according to at least one of the claims 1 to 12 for the application on substrates in industrial machines, in particular in high speed machines, and applied in particular by roller, jet nozzle, cascade or stencil.
